Europäisches Patentamt

European Patent Office

Office européen des brevets

(11) Numéro de publication: **0 412 913 B1**

(12) **FASCICULE DE BREVET EUROPEEN**

(45) Date de publication du fascicule du brevet: **08.11.95** (51) Int. Cl.6: **C04B 7/52**, C04B 28/04

(21) Numéro de dépôt: **90402286.0**

(22) Date de dépôt: **10.08.90**

(54) **Coulis d'injection pour la consolidation de structures fissurées.**

(30) Priorité: **11.08.89 FR 8910836**

(43) Date de publication de la demande:
**13.02.91 Bulletin 91/07**

(45) Mention de la délivrance du brevet:
**08.11.95 Bulletin 95/45**

(84) Etats contractants désignés:
**AT BE CH DE DK ES GB GR IT LI LU NL SE**

(56) Documents cités:
**EP-A- 0 021 681**
**WO-A-88/05425**
**WO-A-90/14322**
**US-A- 4 551 176**

**CHEMICAL ABSTRACTS, vol. 111, no. 16, 16 octobre 1989, Columbus, OH (US); p. 334, no. 139527f**

**R.H. BOGUE, "The Chemistry of Portland Cement", 1955, Reinhold Publishing Corp., New York, NY (US); pp. 692-695**

(73) Titulaire: **LAFARGE NOUVEAUX MATERIAUX**
**62 bis rue de Bagneux**
**F-92120 Montrouge (FR)**

(72) Inventeur: **Ranc, Roger**
**1 rue André Sevenier**
**F-07400 Le Teil (FR)**
Inventeur: **Brisset, Armand**
**4 rue du 11 Novembre**
**F-26200 Montelimar (FR)**
Inventeur: **Debos, Marcel**
**La Grand Vigne,**
**Saint-Thome**
**F-07220 Viviers (FR)**

(74) Mandataire: **Varnière-Grange, Monique et al**
**IXAS Conseil**
**15, rue Emile Zola**
**F-69002 Lyon (FR)**

Rank Xerox (UK) Business Services
(3.10/3.09/3.3.3)

## Description

L'invention a pour objet un coulis à base de ciment utilisable pour le colmatage et la consolidation, par injection, de structures en béton affectée de fissures fines estimées passives ou la régénération de béton caverneux.

Il arrive qu'avec le temps, les structures en béton présentent des fissures plus ou moins importantes en largeur et en profondeur. Celles qui ne sont que très superficielles donnent aux constructions qu'elles affectent un aspect inesthétique, mais sans danger pour la pérennité de l'ouvrage. Un simple enduit peut changer cet aspect. Mais pour les fissures profondes, il peut en aller de la sécurité de la construction et par conséquence de celle des personnes, par exemple dans le cas des ponts ou des barrages. Si de telles fissures ne sont pas réparées, la dégradation se poursuit par érosion physique ou chimique et peut nécessiter, finalement la démolition et la reconstruction de l'ouvrage en cause.

Pour éviter d'en arriver à une telle extrémité, on a déjà eu l'idée d'appliquer à des structures fissurées la technique de l'injection utilisée depuis longtemps pour la consolidation des sols et des terrains. En effet, en injectant sous pression dans les fissures un produit suffisamment fluide pour qu'il puisse pénétrer à l'intérieur de l'ouvrage, on peut remplir les fissures et les cavités internes, de façon à les colmater et même à consolider l'ouvrage si le produit injecté présente de bonnes propriétés d'adhérence et de résistance.

Jusqu'à présent, pour la réparation par injection des ouvrages en béton, on a utilisé le plus souvent des résines thermoplastiques ou thermodurcissables, tels que les polymères, qui offrent une gamme très étendue de viscosité leur permettant de pénétrer dans des fissures très fines. De tels produits présentent cependant des inconvénients. Tout d'abord, leur coût est élevé et rend très onéreuse une intervention à grande échelle. Mais surtout, leur module d'élasticité, après durcissement, est très différent de celui du béton, ce qui crée des points durs préjudiciables à l'ensemble. En outre, leur coefficient de dilatation est également différent de celui du béton, ce qui présente un inconvénient évident pour des ouvrages situés généralement en plein air et, par conséquent, soumis à des variations de températures importantes.

On a donc cherché à utilisé d'autres produits et, en particulier, ceux que l'on utilisait déjà pour consolider et étancher les sols. Par exemple, la demande de brevet GB-2195138 décrit un appareil et un procédé utilisable pour l'injection d'un produit durcissable dans des fissures, le produit injecté pouvant être une résine polyester ou époxy ou bien un coulis de ciment. Toutefois, dans ce document, on n'envisage pas l'injection de fissures d'une largeur inférieure à 2 mm.

La demande internationale WO90/14322 appartient à l'état de la technique visé à l'article 54(3) CBE qui n'est pas pris en considération pour l'appréciation de l'activité inventive.

D'une façon générale, l'utilisation de coulis à base de ciment pour la consolidation de structures en béton est particulièrement avantageuse puisque le produit injecté est, sinon identique, en tout cas similaire à celui de la structure à réparer et présente donc un module d'élasticité et un coefficient de dilatation du même ordre.

On se heurte, toutefois, à une difficulté majeure dès que la largeur de la fissure ou l'ouverture de la cavité devient assez faible. En pratique, lorsque l'on utilise des ciments du commerce, on constate que, si la largeur de la fissure est inférieure à 3 mm, il se produit, dès les premiers centimètres de pénétration du coulis, un bouchon de ciment essoré qui rend impossible la poursuite de l'opération.

Pour mesurer les performances d'un produit d'injection, on a mis au point un essai normalisé dit "essai d'injectabilité à la colonne de sable en milieux sec et humide", faisant l'objet de la norme NF P 18-891. Dans un tel essai, on mesure le temps mis par le produit à tester pour atteindre les différents traits repères placés le long d'une colonne en plastique transparent remplie de sable calibré. On peut ainsi déterminer les propriétés d'injectabilité de différents coulis de ciment.

De tels essais, effectués systématiquement sur différents produits, ont permis de constater qu'il n'était possible d'injecter un coulis de ciment que dans des trous ou interstices dont la largeur est au moins de 1,5 à 2,3 fois la taille des plus gros grains du ciment.

L'expérience a montré toutefois que, même en limitant la taille des plus gros grains au chiffre indiqué, on ne pouvait espérer injecter avec un coulis de ciment des fissures de moins de 1 mm.

Or, dans de nombreux cas, il serait intéressant de pouvoir consolider des fissures beaucoup plus fines. En effet, il est évidemment préférable d'intervenir dès que l'on repère la formation de fissures, avant que celles-ci ne se soient élargies. Par ailleurs, si l'on doit travailler sur une route ou sur un ouvrage en plein air, il vaut mieux le faire en été ou au printemps c'est-à-dire à un moment où, du fait des dilatations, les fissures sont refermées. En effet, les fissures sont plus larges en hiver mais, alors, les journées sont plus courtes et, surtout, il y a des risques de gelée en particulier la nuit.

L'invention a donc pour objet un coulis à base de ciment permettant de consolider par injection des structures affectées de fissures éventuellement très fines, un tel coulis pouvant, en pratique, être utilisé à

2

partir d'une largeur de 0,2 ou 0,3 mm.

Conformément à l'invention, le coulis d'injection est réalisé à partir d'un ciment Portland, finement broyé et dont on a éliminé toutes les particules de dimension supérieure à 30 microns, ledit ciment étant additionné d'un fluidifiant réducteur d'eau dans une proportion pouvant être inférieure à 2% et gâché à l'eau, le rapport en poids de la quantite d'eau à la quantité de ciment ne dépassant pas 0,5.

Dans ce qui suit, en utilisant la nomenclature habituelle à l'industrie cimentière, on désignera par: C3A, l'aluminate tricalcique $3CaO,Al_2O_3$ et par C4AF, l'alumino-ferrite tétracalcique $4CaO, Al_2O_3, Fe_2O_3$.

De préférence, le ciment Portland utilisé contient au plus 5% de C3A et la somme 2C3A + C4AF ne dépasse pas 20% environ, ce qui lui confère de plus une bonne résistance aux sulfates (type V ASTM).

De façon particulièrement avantageuse, le fluidifiant est un produit choisi dans un groupe comprenant les Polynaphtalènes, les Mélamines, et les Lignosulfates, la proportion de fluidifiant étant comprise entre 0,5% et 1,8% en poids du total de produit sec.

Par ailleurs, des résultats encore meilleurs sont obtenus si la proportion d'eau de gâchage par rapport au ciment est limitée à 0,40 au plus.

Dans certains cas, la quantité de ciment peut être réduite grâce à l'adjonction d'un produit de liaison fin tel que pouzzolannes, laltiers finement broyés, gel de silice, silice thermique ou produits organiques tels que résines polyuréthanes, alcool ou acétate de polyvinyle...., dans une proportion de 0,5 à 10% en poids du total de produit sec. Dans le cas de résines ou autres ajouts liquides ou en poudres redispersables, ceux-ci peuvent être ajoutés à l'eau de gâchage.

Mais l'invention sera mieux comprise par la description détaillée de certains exemples particuliers de réalisation illustrés par les dessins annexés.

La Figure 1 donne les courbes granulométriques de plusieurs ciments soumis aux essais d'injectabilité.

La Figure 2 est un diagramme de la durée pratique d'utilisation de deux coulis de ciment soumis aux essais.

La Figure 3 donne les courbes d'injectabilité à la colonne de sable en milieu sec et humide, selon la norme NF P 18-891.

La Figure 4 est un diagramme représentatif de l'essai de fendage selon la norme NF P 18-892.

Comme on l'a indiqué plus haut, il était admis jusqu'à présent, que l'on ne pouvait consolider par injection d'un coulis de ciment que des fissures de largeur au moins égale à 1 mm.

A l'encontre de cette opinion courante, la société déposante a mené à bien des études pour essayer de mettre au point des coulis de ciment susceptibles d'être injectés dans des fissures beaucoup plus fines et a finalement réussi à traiter des fissures à partir d'une largeur de l'ordre de 0,2 à 0,3 mm, c'est-à-dire bien inférieure aux largeurs admises jusqu'à présent.

Une telle étude était rendue plus difficile par le fait que les caractéristiques sur lesquelles on peut agir, comme la composition du ciment, sa finesse, le rapport E/C, les proportions d'additifs, sont nombreuses et interfèrent les unes sur les autres.

On sait, en particulier, qu'une proportion relativement importante d'eau, si elle facilite, évidemment l'injection, peut entraîner l'exsudation et, par conséquent, la déstabilisation du coulis, l'injectabilité optimale pouvant se définir comme un compromis entre la fluidité et la stabilité de l'émulsion eau/ciment.

On a ainsi pu mettre en valeur le fait qu'il était nécessaire de limiter encore plus qu'on ne le croyait, la dimension maximale des particules de ciment.

En effet, alors que le rapport admis jusqu'à présent, entre la largeur minimale des fissures et la dimension maximale des grains était au maximum de 5 et même inférieur, dans certains cas, on a constaté que, pour obtenir de bons résultats, il fallait éliminer aussi complétement que possible les particules de dimensions supérieures à 30 microns et, mieux, ne pas dépasser, de préférence, 10 à 12 microns, ce qui correspond à un rapport minimal de 16 au lieu de 5 pour l'injection de fissures de 0,2 à 0,3 mm.

On a pu établir que la largeur minimale des fissures susceptibles d'être colmatées par un coulis selon l'invention pouvait aller jusqu'à 10 à 15 fois la dimension maximale des grains.

On a, en outre, découvert, que la nature du ciment était également importante, tous les ciments ne convenant pas à l'injection de fissures très fines.

En effet, pour obtenir les résultats recherchés, il faut utiliser un ciment Portland contenant, de préférence, au maximum 5% d'aluminate tricalcique.

Le rapport E/C doit également être plus faible que celui auquel on opérait auparavant pour les coulis d'injection puisqu'il doit être, au maximum, de 0,6 et, de préférence, de l'ordre de 0,4 ou moins.

Pour conserver la fluidité nécessaire avec un rapport E/C aussi faible, le ciment est additionné d'un fluidifiant réducteur d'eau tel qu'un polynaphtalène, une mélamine ou un lignosulfate mais dans une proportion très réduite. On a constaté, en effet, qu'il était possible de respecter un rapport E/C limité à 0,40 en utilisant une quantité de fluidifiant pouvant être inférieure à 2% de la quantité de ciment et pouvant même descendre au-dessous de 1%. Il est possible également d'ajouter au ciment des constituants secondaires très fins tels que pouzzolanes, laitiers ou silice, ainsi que des résines, dans une proportion de 0,5 à 10%.

Mais dans certains cas et avec certains fluidifiant ((mélanine, lignosulfate) il pourrait être intéressant d'augmenter le rapport E/C jusqu'à 0,45 - 0,50 en utilisant jusqu'à 5% de fluidifiant.

Pour mieux mettre en valeur les avantages de l'invention, on a soumis à des essais comparatifs, d'une part un coulis A correspondant aux caractéristiques de l'invention ainsi définies et, d'autre part, un coulis d'injection B réalisé de façon classique à partir d'un Ciment du Commerce.

Les caractéristiques principales des ciments et des coulis réalisés sont indiquées sur le tableau A ci-dessous.

TABLEAU A

| Caractéristiques | A | B |
|---|---|---|
| Nature du ciment | ciment Portland | ciment de laitier |
| Masse volumique (T/m$^3$) | 3,12 | 2,80 |
| Surface spécifique (cm$^2$/g) | 7000 | 17000 |
| Granulométrie | Selon graphique Fig. 1 | |
| E/C | 0,40 | 1,6 |
| DPU | Selon graphique Fig. 2 | |
| Résistance en traction Rt 28 (MPa) | 10 | 1,5 |
| Résistance)en compression Rc 28 (MPa) | 115 | 9 |
| Retrait (micron/m) (28j) | 4300 | non mesuré |
| Gonflement (micron/m (28 j) | 40 | non mesuré |
| Porosité (%) | 1% | 65% |

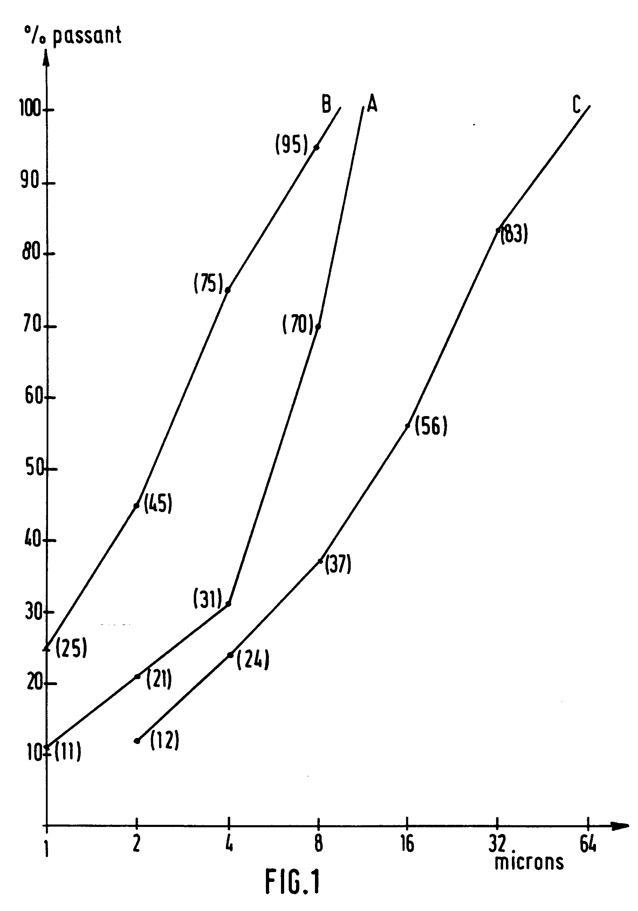

Par ailleurs, les courbes granulométriques des ciments utilisés pour les coulis A et B sont indiquées sur la Figure 1 à laquelle on a ajouté la courbe granulométrique d'un ciment ordinaire C.

Le coulis A selon l'invention est réalisé à partir d'un ciment Portland finement broyé et dont on a éliminé les particules de dimensions supérieures à 16 microns.

Le coulis B est réalisé à partir d'un ciment à base de laitier encore plus fin.

A titre d'exemple, le ciment C est un produit du commerce relativement fin.

La très grande finesse du ciment B apparaît sur le tableau A précédent où l'on a indiqué notamment la surface spécifique. On constate qu'un tel ciment doit être gâché avec un rapport E/C de 1,6 au moins.

Comme on le voit sur le tableau A, les résistances à la traction Rt et à la compression Re à 28 jours sont bien plus faibles pour le coulis B que pour le coulis A selon l'invention.

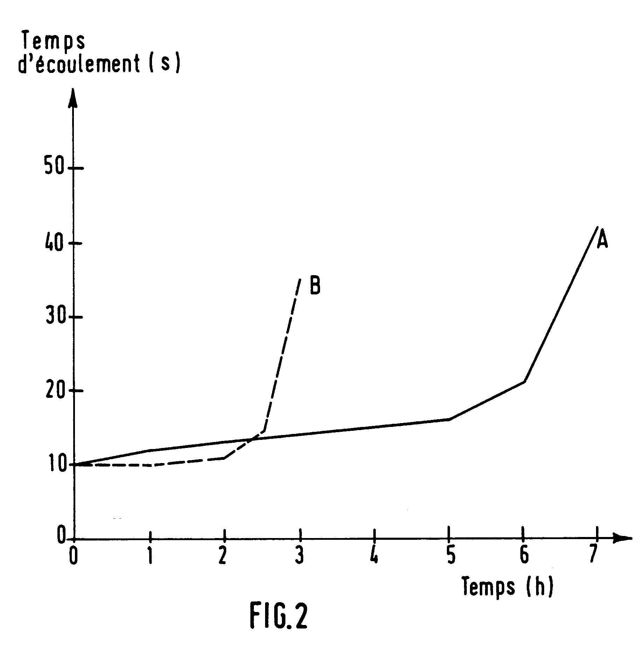

Par ailleurs, la Figure 2 montre que la durée pratique d'utilisation à 20°C est bien meilleure pour le produit A de l'invention que pour le produit B. En effet, sur ce graphique, qui indique en ordonnées la durée d'écoulement en secondes au cône de Marsh après un temps indiqué en heures en abscisses, on voit que le produit B devient pratiquement inutilisable après 2 h 30 alors que le produit A selon l'invention peut être utilisé pendant 6 heures. Ceci est un avantage important pour l'injection de structures en béton car on peut ainsi préparer à l'avance des quantités relativement importantes de coulis ou faire face à un arrêt momentané de la procédure d'injection.

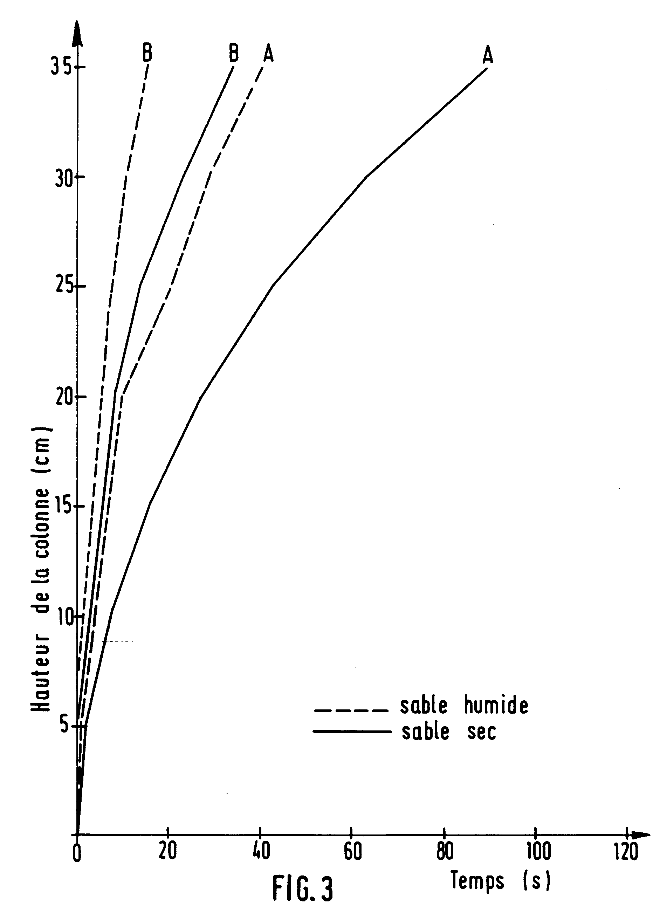

Pour apprécier les possibilités d'injection de ces différents produits, on les a soumis à l'essai d'injectabilité à la colonne de sable défini par la norme NF P 18-891. Le résultat est indiqué sur le diagramme de la Figure 3 qui montre le temps mis par le coulis pour monter dans la colonne de sable sur une hauteur indiquée en ordonnée.

Pour les deux coulis A et B, on a indiqué les temps d'injection en milieu sec et en milieu humide selon la norme NF P 18-891. On voit que le produit B de comparaison traverse plus vite la colonne de sable que le produit A mais les performances de ce dernier restent excellentes et bien inférieures aux limites de la Norme pour la pénétrabilité élevée.

De plus, il ne suffit pas que le produit puisse être facilement injecté dans les fissures, il faut encore qu'il apporte les qualités voulues aussi bien pour l'étanchéité que pour la consolidation.

En ce qui concerne l'étanchéité, on a déjà vu sur le tableau A que la porosité du produit A est très faible par rapport à celle du coulis B.

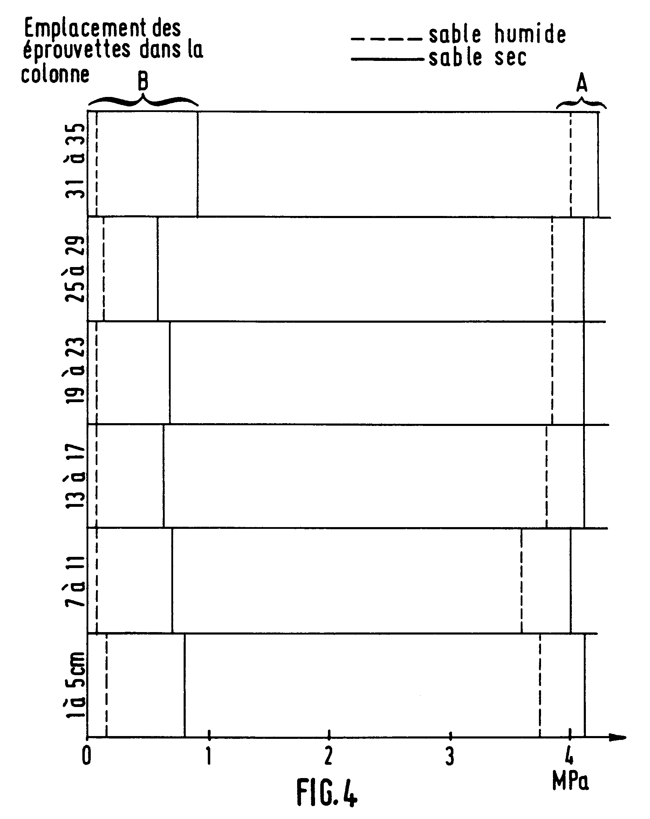

Sur la Figure 4, on a représenté le résultat d'essais de fendage réalisés selon la norme NF P 18-892. Le diagramme indique en abscisses la résistance au fendage ($f_t$) à 28 jours exprimée en Mégapascals pour les six éprouvettes obtenues à partir de la colonne. On voit que la résistance au fendage des éprouvettes injectées avec le coulis B est pratiquement négligeable en milieu humide et très faible en "milieu sec" alors que, dans les deux cas, les résistances obtenues après injection par le coulis A répondent aux exigences de la Norme NF P 18-880 (chap. 3-2).

Pour vérifier les qualités qui ressortent des essais ainsi réalisés, on a d'autre part utilisé les deux produits A et B pour la régénération de bétons caverneux. Les résultats sont indiqués sur le tableau B ci-après.

TABLEAU B

| REGENERATION D'UN BETON CAVERNEUX | | | |
|---|---|---|---|
| CARACTERISTIQUES ETUDIEES | Béton caverneux | après injection par | |
| | | A | B |
| Porosité (%) | > 35 | 12,3 | 21,4 |
| Perméabilité à l'eau (m³/s) | 6.10-3 | 2,6.10-11 | 2,8.10-11 |
| Résistances traction par flexion (MPa) | 0,9 | 3,6 | 1,9 |
| Résistances compression (MPa) | 5,2 | 43,5 | 16,2 |

Sur le tableau B, on a indiqué les caractéristiques d'un béton caverneux avant et après injection par l'un des deux coulis A et B. On voit que, dans tous les cas, l'injection améliore les performances. Cependant, la diminution de la porosité est plus importance après injection par le coulis A selon l'invention et, surtout, les résistances en traction et en compression sont bien plus grandes après injection par le coulis A.

Enfin, le tableau C ci-dessous donne les résultats d'un essai d'adhérence effectué selon la norme NF P 18-894 et qui consiste à mesurer la charge de rupture d'éprouvettes de mortier cassées et recollées à l'aide du coulis d'injection étudié puis soumises à un essai de flexion. On voit que les performances du coulis A sont très supérieures à celles du coulis B puisque l'on peut obtenir, après recollage, des charges de rupture certes inférieures mais qui restent, cependant du même ordre que celles des éprouvettes d'origine.

TABLEAU C

| ADHERENCE SUR FISSURE | | | |
|---|---|---|---|
| CARACTERISTIQUES | | A | B |
| Rapport E/C<br>Résistance en traction par flexion du coulis (MPa) | | 0,40<br>10,5 | 1,9<br>1,0 |
| Collage prismes 4 x 4 x 16 cm | AVANT | 10,1 | |
| | APRES RECOLLAGE | 5,4 | 1,3 |

On a soumis à de tels essais un certain nombre de coulis de compositions différentes, réalisés à partir de deux ciments Portland I et II ayant les compositions suivantes:

| | I | II |
|---|---|---|
| Insolubles | 0,12 | 0,15 |
| $SiO_2$ | 21,68 | 22,95 |
| $Al_2O_3$ | 4,10 | 3,45 |
| $Fe_2O_3$ | 4,12 | 2,50 |
| CaO | 65,17 | 66,60 |
| MgO | 0,74 | 0,90 |
| $SO_3$ | 2,21 | 1,80 |
| $CO_2 + H_2O$ | 1,10 | 0,85 |
| $K_2O$ | 0,28 | 0,38 |
| $Na_2O$ | 0,03 | 0,14 |
| Eléments mineurs | 0,45 | 0,28 |
| TOTAL | 100 | 100 |
| C3A | 3,91 | 4,90 |
| C4AF | 12,52 | 7,60 |

Les essais ont été effectués selon les normes indiquées précédemment sur des colonnes de sable ayant la composition suivante:

0,63 - 0,8 mm: 33%

0,80 - 1,0 mm: 30%

1,0 - 1,25 mm: 37%

Le tableau E ci-dessous indique pour chaque exemple:

- la proportion et la nature (I ou II) du ciment,
- la proportion et la nature du fluidifiant:
  Polynaphtalène (P) ou Mélamine (M)
- le cas échéant, la proportion et la nature des constituants secondaires
- le rapport E/C
- le temps de coulabilité (T) en secondes, c'est-à-dire la durée d'écoulement dans l'éprouvette,
- une indication sur la pénétrabilité,

- la résistance au fendage $f_t$ en Mégapascals.

TABLEAU E

| N° | Composition (%) | | E/C | T (secondes) | Pen. | $f_t$ MPa |
|---|---|---|---|---|---|---|
| 1 | 99,1 | I | 0,54 | 70 | élevée | 4,08 |
| | 0,9 | P | | | | |
| 2 | 99,1 | I | 0,50 | 300 | moyenne | – |
| | 0,9 | M | | | | |
| 3 | 98,5 | I | 0,40 | 125 | élevée | 4,5 |
| | 1,5 | P | | | | |
| 4 | 98,4 | I | 0,40 | 90 | élevée | – |
| | 1,6 | P | | | | |
| 5 | 99,25 | II | 0,40 | 242 | moyenne | 3,52 |
| | 0,75 | P | | | | |
| 6 | 99,25 | II | 0,40 | 193 | élevée | 3,80 |
| | 0,75 | M | | | | |
| 7 | 91,9 | II | 0,40 | 118 | élevée | 4,54 |
| | 7,5 silice | | | | | |
| | thermique | | | | | |
| | 0,6 | P | | | | |
| 8 | 91,9 | II | 0,40 | 144 | élevé | 4,67 |
| | 7,5 silice | | | | | |
| | 0,6 | P | | | | |
| 9 | 91,75 | II | 0,40 | 171 | élevée | 5,21 |
| | 7,5 silice | | | | | |
| | 0,75 | M | | | | |
| 10 | 91,65 | II | 0,40 | 145 | élevée | 4,06 |
| | 7,50 silice | | | | | |
| | 0,85 | M | | | | |
| 11 | 91,60 | II | 0,40 | 131 | élevée | 3,80 |
| | 7,50 silice | | | | | |
| | 0,90 | M | | | | |
| 12 | 91,50 | II | 0,40 | 165 | élevée | 4,75 |
| | 7,50 silice | | | | | |
| | 1,0 | M | | | | |

TABLEAU E  (suite)

| N° | Composition (%) | E/C | T (secondes) | Pen. | $P_t$ MPa |
|---|---|---|---|---|---|
| 13 | 90,90  II<br>7,50  L*<br>1,60  P | 0,40 | 155 | élevée | – |
| 14 | 90,90  II<br>7,50  C*<br>1,60 | 0,40 | 253 | Moyenne | – |

S = Silice Thermique ou Fumée de silice

L = Laitier

C = Cendres, une pouzzolane

Les exemples 1 à 4 sont réalisés avec le ciment I et les exemples 5 à 14 avec le ciment II.

Selon les cas, le fluidifiant était un polynaphtalène (P) ou une mélamine (M).

Dans le cas des exemples 7 à 12, une partie du ciment a été remplacée par de la silice. Le constituant secondaire est du laitier dans l'exemple 13 et, dans l'exemple 14, des cendres volantes qui sont un des types de pouzzolanes.

Bien entendu, d'autres ciments Portland pourraient être utilisés, la composition du coulis, notamment la proportion de fluidifiant et, le cas échéant, de constituant secondaire ainsique le rapport E/C étant adaptés à la composition du ciment, à la structure sur laquelle on intervient et à la nature de l'opération, consolidation ou étanchement.

On constate que les deux ciments ont une bonne injectabilité. Dans le cas du ciment II, ses faibles teneurs en aluminate tricalcique et aluminoferrite tétracalcique le rendent tout particulièrement recommandé pour les travaux en milieux sulfatés.

**Revendications**

1. Coulis d'injection à base de ciment pour la consolidation de structures affectées de fissures fines, caractérisé par le fait qu'il est réalisé à partir d'un ciment Portland finement broyé avec élimination aussi complète que possible, de toutes les particules de dimensions supérieures à 30 microns, ledit ciment étant additionée d'un fluidifiant réducteur d'eau et gâché à l'eau, le rapport en poids de la quantité d'eau à la quantité de ciment étant inférieur à 0,5 et la proportion de fluidifiant pouvant être inférieure à 2%.

2. Coulis d'injection selon la revendication 1, caractérisé par le fait que la dimension maximale des grains du ciment est de l'ordre de 10 à 12 microns.

3. Coulis d'injection selon l'une des revendications 1 et 2, caractérisé en ce que le fluidifiant est choisi dans un groupe comprenant les Polynaphtalènes, les Mélamines et les lignosulfates.

4. Coulis d'injection selon l'une des revendications précédentes, caractérisé par le fait que la proportion de fluidifiant est comprise entre 0,5% et 1,6% en poids du total de produit sec.

5. Coulis d'injection selon l'une des revendications précédentes, caractérisé par le fait que la proportion d'eau de gâchage par rapport au ciment est à 0,40 au plus.

6. Coulis d'injection selon l'une des revendications précédentes, caractérisé par le fait que le ciment est associé à un constituant secondaire tel que laitier, pouzzolanes, silice ou résines dans une proportion de 0,5 à 10% en poids du total de produit sec.

7. Coulis d'injection selon l'une des revendications précédentes, caractérisé par le fait que la largeur minimale des fissures susceptibles d'être colmatées par le coulis peut être de l'ordre de 10 à 15 fois la dimension maximale des particules de ciment.

8. Coulis d'injection selon l'une des revendications précédentes caractérisé par le fait que le ciment contient au plus 5 % d'aluminate tricalcique C3A.

9. Coulis d'injection selon la revendication 8, caractérisé par le fait que les teneurs en aluminate tricalcique C3A et en aluminoferrite tétracalcique C4AF dans le ciment sont telles que 2C3A + C4AF ne dépasse pas 20 %.

10. Procédé de consolidation d'une structure en béton affectée de fissures fines, dans lequel on injecte sous pression un coulis de ciment dans les fissures, caractérisé par le fait que l'on réalise un colmatage de fissures dont la largeur peut descendre jusqu'à 0,2 mm, en y injectant, à partir de l'extérieur, un coulis de ciment réalisé à partir d'un ciment Portland finement broyé dont on a éliminé toutes les particules de dimensions supérieures à 30 microns, ledit ciment étant additionné d'un fluidifiant réducteur d'eau et gâché à l'eau, le rapport en poids de la quantité d'eau à la quantité de ciment ne dépassant pas 0,5 et la proportion de fluidifiant pouvant être inférieure à 2 % de la quantité de ciment.

11. Utilisation d'un coulis de ciment Portland réalisé selon l'un des revendications 1 à 8, pour la consolidation d'une structure en béton affectée de fissures fines dont la largeur minimale peut descendre jusqu'à 0,2 mm.

**Claims**

1. Cement-based injection grout for reinforcing structures containing fine cracks, characterized in that it is produced from a finely ground Portland cement with as complete as possible removal of all the particles of sizes greater than 30 microns, the said cement having added to it a water-reducing plasticizer and being mixed with water, the weight ratio of the quantity of water to the quantity of cement being less than 0.5 and the proportion of plasticizer being capable of being less than 2%.

2. Injection grout according to Claim 1, characterized in that the maximum grain size of the cement particles is in the order of 10 to 12 microns.

3. Injection grout according to Claim 1 or 2, characterized in that the plasticizer is chosen from a group comprising polynaphthalenes, melamines and lignosulfates.

4. Injection grout according to one of the preceding claims, characterized in that the proportion of plasticizer is between 0.5% and 1.6% by weight of the total dry product.

5. Injection grout according to one of the preceding claims, characterized in that the proportion of mixing water relative to the cement is at most 0.40.

6. Injection grout according to one of the preceding claims, characterized in that cement is combined with a secondary constituent such as slag, pozzolanas, silica or resins in a proportion 0.5 to 10% by weight of the total dry product.

7. Injection grout according to one of the preceding claims, characterized in that the minimum width of the cracks capable of being filled in using the grout can be in the order of 10 to 15 times the maximum size of the cement particles.

8. Injection grout according to one of the preceding claims, characterized in that the cement contains at most 5% tricalcium aluminate C3A.

**9.** Injection grout according to Claim 8, characterized in that the contents of tricalcium aluminate C3A and tetracalcium aluminoferrite C4AF in the cement are such that 2C3A + C4AF does not exceed 20%.

**10.** Process for reinforcing a structure made of concrete and containing fine cracks, in which a cement grout is injected under pressure into the cracks, characterized in that filling-in of the cracks whose width can be as little as 0.2 mm is carried out by injecting therein, from the outside, a cement grout produced from a finely ground Portland cement from which all the particles of sizes greater than 30 microns have been removed, the said cement having added to it a water-reducing plasticizer and being mixed with water, the weight ratio of the quantity of water to the quantity of cement not exceeding 0.5 and the proportion of plasticizer being capable of being less than 2% of the quantity of cement.

**11.** Use of a Portland cement grout produced according to one of Claims 1 to 8, for reinforcing a concrete structure containing fine cracks whose minimum width can be as little as 0.2 mm.

**Patentansprüche**

**1.** Injektionsmasse auf Zementgrundlage zur Sanierung von Strukturen, die durch feine Risse beeinträchtigt sind,
**dadurch gekennzeichnet**,
daß sie ausgehend von einem fein zerkleinerten Portlandzement hergestellt ist, aus dem möglichst vollständig alle Teilchen beseitigt sind, die großer als 30 $\mu$m sind, daß der Zement einen Zusatz eines Flüssigmacher-Wasserreduktionmittels hat und mit Wasser angemacht ist, wobei das Gewichtsverhältnis der Wassermenge zur Zementmenge kleiner ist als 0,5 und der Anteil des Flüssigmachers unter 2 % sein kann.

**2.** Injektionsmasse nach Anspruch 1, dadurch gekennzeichnet, daß die größte Abmessung der Zementkörnchen in der Größenordnung von 10 bis 12 $\mu$m liegt.

**3.** Injektionsmasse nach einem der Ansprüche 1 und 2, dadurch gekennzeichnet, daß der Flüssigmacher aus einer Gruppe ausgewählt ist, die Polynaphtaline, Melamine und Lignosulfate umfaßt.

**4.** Injektionsmasse nach einem der vorhergehenden Ansprüche, dadurch gekennzeichnet, daß der Anteil des Flüssigmachers enthalten ist zwischen 0,5 und 1,6 % des Gesamtgewichts des Trockenprodukts.

**5.** Injektionsmasse nach einem der vorhergehenden Ansprüche, dadurch gekennzeichnet, daß das Verhältnis des Anmachwassers zum Zement auf höchstens 0,40 begrenzt ist.

**6.** Injektionsmasse nach einem der vorhergehenden Ansprüche, dadurch gekennzeichnet, daß der Zement mit einem Zweit-Bestandteil wie z.B. Schlacke, Puzzolane, Silizium bzw. Kieselerde oder Kunstharzen in einem Verhältnis von 0,5 bis 10 Gewichtsprozent in bezug auf die Gesamttrockenmasse verbunden ist.

**7.** Injektionsmasse nach einem der vorhergehenden Ansprüche, dadurch gekennzeichnet, daß die kleinste Größe der Risse, die durch die Injektionsmasse verschließbar sind, in der Größenordnung des Zehn- bis Fünfzehnfachen der größten Abmessung der Zementkörnchen sein kann.

**8.** Injektionsmasse nach einem der vorhergehenden Ansprüche , dadurch gekennzeichnet, daß der Zement wenigstens 5 % Tricalciumaluminat C3A enthält.

**9.** Injektionsmasse nach Anspruch 8, dadurch gekennzeichnet, daß die Gehalte an Tricalciumaluminat C3A und an Tetracalciumaluminiumferrit C4AF in dem Zement so groß sind, daß 2C3A + C4AF 20 % nicht übersteigen.

**10.** Verfahren zur Sanierung einer Betonstruktur, die durch feine Risse beeinträchtigt ist, wobei eine Zementinjektionsmasse unter Druck in die Risse injiziert wird,
**dadurch gekennzeichnet**,
daß ein Verschließen der Risse, deren Breite bis hinab zu 0,2 mm betragen kann, dadurch erfolgt, daß man von außen eine Zementinjektionsmasse injiziert, die ausgehend von einem fein zerkleinerten Portlandzement hergestellt ist, aus dem möglichst vollständig alle Teilchen beseitigt sind, die größer als 30 μm sind, daß der Zement einen Zusatz eines Flüssigmacher-Wasserreduktionmittels hat und mit Wasser angemacht ist, wobei das Gewichtsverhältnis der Wassermenge zur Zementmenge 0,5 nicht überschreitet und der Anteil des Flüssigmachers kleiner als 2 % der Zementmenge sein kann.

11. Verwendung einer Portlandzement-Injektionsmasse nach einem der Ansprüche 1-8 zur Sanierung bzw. Verfestigung einer Betonstruktur, die durch feine Risse beeinträchtigt ist, deren kleinste Breite bis hinab zu 0,2 mm betragen kann.

FIG.1

FIG.2

FIG. 3

FIG. 4